(19) Europäisches Patentamt

European Patent Office

Office européen des brevets

(11) **EP 1 255 121 B1**

(12) **EUROPEAN PATENT SPECIFICATION**

(45) Date of publication and mention
of the grant of the patent:
**05.01.2005 Bulletin 2005/01**

(51) Int Cl.⁷: **G01S 1/04**, H04B 1/707

(21) Application number: **01110890.9**

(22) Date of filing: **04.05.2001**

(54) **A method for reducing multipath interferences errors in a navigation receiver**

Verfahren zur Verringerung der Mehrwegstörungen in einem Navigationsempfänger

Procédé de réduction d'erreurs de trajets multiples dans un récepteur de navigation

(84) Designated Contracting States:
**AT BE CH CY DE DK ES FI FR GB GR IE IT LI LU MC NL PT SE TR**

(43) Date of publication of application:
**06.11.2002 Bulletin 2002/45**

(73) Proprietor: **Deutsches Zentrum für Luft- und Raumfahrt e.V.**
**53175 Bonn (DE)**

(72) Inventor: **Selva, Jesus Dipl.-Ing.**
**82205 Gilching (DE)**

(74) Representative:
**von Kirschbaum, Albrecht, Dipl.-Ing.**
**Patentanwalt,**
**Postfach 15 20**
**82102 Germering (DE)**

(56) References cited:
**US-A- 5 347 536**     **US-A- 5 912 919**
**US-A- 5 963 582**

**Description**

The present invention relates to a method for reducing multipath interference errors in a navigation receiver arranged to receive a pseudonoise encoded spread spectrum input signal comprising a direct path signal and one or a plurality of multipath signal replicas and to carry out a correlation to generate a correlation signal by correlating said input signal with a reference signal to synchronize the receiver and to deliver time-of-arrival estimation by means of a delay-lock loop, eliminating any signal replica outside of a fixed delay interval containing all times of arrival of said input signal, due to the cross-correlation properties of the spreading pseudonoise code.

In the prior art, navigation receivers for use in global position systems are known. In such systems, the receiver antenna is positioned to receive signals transmitted from satellites. A problem encountered with receiving these signals is that multipath propagation of electromagnetic signals causes errors in the location signals produced by the receivers. More particularly, reflections of radiation from the ground and from objects cause unwanted interference with the signals received directly from the satellites. The time-of-arrival estimation error produced by multipath interference in a navigation receiver induces a strong degradation of the positioning accuracy. Several solutions to this problem have been proposed.

For example, in US 5 543 803 A is described as state of the art a receiver system in which protective materials such as choke coils and absorbing materials are placed around the antenna to inhibit the ground and object reflections. While this provides satisfactory protection in some cases the output of the antenna may still be affected by multipath. In US 5 543 803 A is described another receiver system providing a plurality of antennas located at spaced positions from each other with each producing an output indicative of transmission from the satellites.

Since the position of the signals is slightly different, the signals generated by the receivers will be slightly different. Accordingly, the signals are presented to one or a plurality of differential correction processors which in accordance with a predetermined program to correct each signal for the slight position variances of the receivers. The differential correction processors also operate to determine which, if any, of the receiver outputs is in error due to the multipath errors and eliminates it in the production of a resulting output. This known multipath processing technique requires a plurality of receivers and processors and therefore it is quite complex, without mentioning that it is not very accurate in positioning.

A technique for reducing the effect of multipath signals in a receiver processing pseudorandom code signals, such as in a global positioning system (GPS) receiver, is also known from US 5 963 582 A. Here, the effects of multipath signals are minimized by correlating the received code with a multipath mitigation window that results in a code error function that reduces or eliminates the multipath effects. The multipath mitigation window, which may be any of a number of preferred waveforms, provides a code error waveform that varies in opposite direction from zero at a desired tracking point, but assumes a nearly zero value when the multipath mitigation window is advanced from the tracking or synchronization point by more than a small fraction of a code chip.

Because of this nearly zero code error value on the early side of the desired tracking point, delayed multipath signals will have a corresponding code error function that is nearly zero at the desired tracking point of the directly received signals, and the multipath signals will, therefore, have a reduced effect on the desired tracking point and on code synchronization. However, this known multipath processing technique is not very accurate in many cases.

Another technique for reducing the effect of multipath signals in a receiver processing pseudorandom code signals, such as in a global positioning system (GPS) receiver, is known from US 5 918 161 A. This method consists of first estimating the impulse response of the effective multipath channel by a least square algorithm. This step is followed by obtaining an inverse filter which equalizes the multipath channel response to the desired ideal multipath free response to the maximum extent possible within the specified constraints of the implementation complexity. From the equalized response, estimates of the true code delay can be made.

This method is embodied in a receiver comprising a series of correlators which generate demodulated signals from known reference signals, and the demodulated reference signals are then used to develop a discriminator function from which multipath error can be approximately determined. The receiver using this method then compensates for the multipath error, and produces a final differential code range estimate after compensating for the multipath error. To achieve a rather satisfying accuracy, this deconvolution approach is in its final implementation pretty complex, and there is no clear way to reduce the complexity. Furthermore, the interpolation at the output of the inverse digital filter arranged in the code loop may not be accurate.

What is needed, is an improved method for reducing the effect of multipath signals in a navigation receiver processing pseudorandom code signals, such as in a global positioning system (GPS or GNSS) receiver, avoiding the limitations of conventional designs and providing a low-complexity synchronization in the navigation receiver including more accurate results in a wide range of reception conditions.

The present invention provides a method for reducing multipath interference errors in a navigation receiver arranged to receive a pseudonoise encoded spread spectrum input signal comprising a direct path signal and one or a plurality of multipath signal replicas and to carry out a correlation to generate a correlation signal by correlating said input signal with a reference signal to synchronize the receiver and to deliver time-of-arrival estimation by means of a delay-lock loop, eliminating any signal replica outside of a fixed delay interval containing all times of arrival of said input signal, due to the cross-correlation properties of the spreading pseudonoise code, characterized
by using a signal model based on a deterministic antenna array,
by applying a truncated series approximating said reference signal by means of a series of integer powers of a variable in form of a polynomial delay function together with its coefficient and being valid inside said delay interval,
by introducing said truncated series into the signal model to form a modified signal model equation by substitution, this equation leading to an implementation of said correlation based on a bank of correlators, and
by performing minimization of the estimation error by means of an appropriate minimization algorithm.

The invention presents a synchronization technique, operative in a navigation receiver under multipath interference, that takes into account its special conditions: low signal-to-noise ratio, DS-CDMA (Direct Sequence - Code Division Multiple Access) signals with long spreading codes, and very low data rates. The method according the invention solves a huge optimization problem. Although there is given a large data size, this problem can be solved in real time by the method according to the invention. A key to the solution is to see in the given fact that the transmitted signal $s(t)$ is quite redundant (bandlimited signal), so that a proper signal description may reduce the size of problem drastically.

The method according to the present invention is based on a signal model of a deterministic antenna array. In this context, the system-specific features translate into the assumption that all times of arrival must be inside a delay interval in which a truncated series approximation of the reference signal is valid. The introduction of this series in the signal model to form a modified signal model equation by substitution, this equation leading to an implementation of a correlation based on a bank of correlators. The associated minimization problem concerning the estimation is solved by an appropriate minimization algorithm, preferably ESPRIT, IQML (Iterative Quadratic Maximum Likelihood) or a modification of Newton's Method. The modified signal model is given in claim 2. Maximum Likelihood Estimation to perform minimization of the estimation error is given in claim 3 and preferred algorithms to perform said minimization of the estimation error are given in claims 4 to 6.

The method according to the invention may be used preferably in a navigation receiver designed for the GPS (Global Positioning System) or GNSS (Global Navigation Satellite System) navigation system.

The objects and features of the present invention, which are believed to be novel, are set forth with particularity in the appended claims. The present invention, both as to its organization and manner of operation, together with further objects and advantages, may best be understood by reference to the following description, taken in connection with the accompanying drawings.

Fig.1   is an example showing the multipath problem,

Fig.2   shows, that signal replicas $s(\tau)$ and any antenna sensor signal without noise, $\mathbf{y}_i$, belongs to the span of correlator's space $\mathbf{C}$,

Fig.3   shows in a simulation result graph the Root Mean Square delay error of the direct delay estimator for different signal-to-noise ratios using three different preferred minimization algorithms, and

Fig.4   shows in a graph the computational burden of the three preferred minimization algorithms.

In a GPS or GNSS navigation receiver, the multipath interference produces a bias in the time-of-arrival estimation delivered by the DLL (Delay-Lock Loop), that results in a degradation of the positioning accuracy. The simple modifications of the receiver, like reducing the early-late spacing or changing the antenna pattern, do not eliminate this effect. Under these circumstances, the DLL precision is good enough to detect the data due to the long spreading codes, but is too coarse for positioning.

For example, in the GPS C/A signal, the DLL precision is approximately 1 chip of the pseudonoise code, and one data symbol is composed of 1023 code chips, while 1 chip corresponds to 300 meters in pseudorange (distance) accuracy. Several features of the navigation receiver allow to simplify the synchronization problem.

First, it is assumed that the data modulation has been removed using the estimation provided by the DLL. With this, the synchronization consists in estimating the time-of-arrival of a known signal with the interference of several delayed signal replicas.

Second, any signal replica with a delay greater than approximately 1,5 chips is eliminated, due to the cross-correlation properties of the spreading code. Thus, it can be fixed a delay interval around the DLL timing estimation in which all times of arrival are contained.

Third, if there is used a sampling frequency close to or above the Nyquist rate, like 2 samples/chip, the navigation signal varies slowly in the delay interval. All this implies that the reference signal is quite regular in a delay interval, and can be approximated using a truncated series. The selection of the functions in the series depends on the complexity of the resulting minimization problems.

If there are used sines or undamped exponentials, the technique would be similar to a technique applied at the output of a matched filter. According to the invention there is developed a signal model of a deterministic antenna array, which approximates the navigation signal using a series of integral powers instead, because they provide a good approximation when the reference signal varies slowly in the delay interval, and the resulting optimization problem has a quite smaller size.

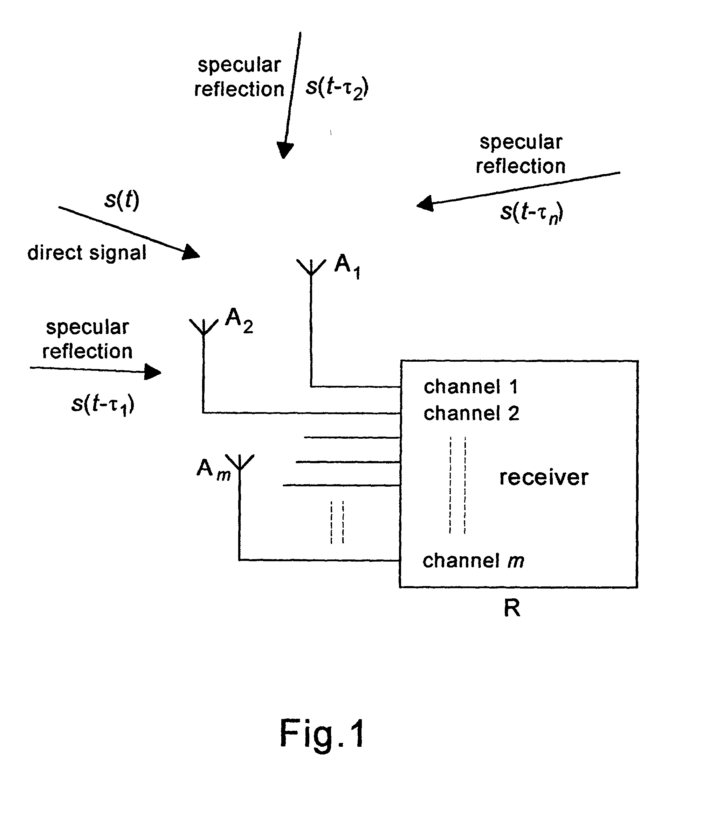

As shown in Fig.1, there is considered an array of antenna sensors $A_1$ to $A_m$ with arbitrary geometry and equal directional pattern. A direct wave signal $s(t)$ and several signal replicas $s(t-\tau_1), s(t-\tau_2),...,s(t-\tau_n)$ delayed by specular reflections impinge the antenna array. The signal at the $i$-th antenna sensor $A_i$ of the antenna sensors $A_1$ to $A_m,(i = 1,2,...,m)$, is

$$y_i(t) = \sum_{k=1}^{n} a_{ik} s(t - \tau_k) + n_i(t), \qquad (1)$$

where the known reference signal $s(t)$ contains the spreading code and no data modulation. The remaining elements are:

$a_{ik}$    Coefficient that depends on the $i$-th antenna sensor pattern, and on the complex amplitude and direction of arrival of the $k$-th impinging signal,

$\tau_k$    Delay of the $k$-th signal replica,

$n_i(t)$    Complex White Gaussian noise process with variance $\sigma^2$ and uncorrelated among antenna sensors $A_1$ to $A_m$.

A receiver R comprising $m$ channels and connected with the antenna sensors $A_1$ to $A_m$ takes $N$ samples, relative to its own time reference, at epochs $t = t_1, t_2,...,t_N$. In what follows, the transpose and Hermitian matrix operations are denoted with $(\cdot)^T$ and $(\cdot)^H$, respectively.

The samples can be arranged in a matrix **Y**, in which time varies column-wise and the antenna sensor $A_i$ row-wise, i.e. $(\mathbf{Y})_{li}$ is the sample at time $t_1$ from the $i$-th sensor. The $k$-th wave adds to this observation matrix $\mathbf{s}(\tau_k)\mathbf{a}_k^T$, where

$$a_k \equiv [a_{1k}, a_{2k},...,a_{mk}]^T,$$

$$\mathbf{s}(\tau) \equiv \left[s(t_1 - \tau), s(t_2 - \tau), . . . , s(t_N - \tau),\right]^T$$

are the time and spatial signatures, respectively. So, the matrix **Y** can be written as

$$\mathbf{Y} = \sum_{k=1}^{n} \mathbf{s}(\tau_k)\mathbf{a}_k^T + \mathbf{N} = \mathbf{S}(\tau)\mathbf{A}^T + \mathbf{N} \qquad (2)$$

with

$\tau \equiv [\tau_1,\tau_2,...,\tau_n]^T$. Vector of delays .
$\mathbf{S}(\tau) \equiv [s(\tau_1),s(\tau_2),...,s(\tau_n)]$. Time signatures .
$\mathbf{A} \equiv [\mathbf{a}_1,\mathbf{a}_2,...,\mathbf{a}_m]$. Spatial signatures .
$\mathbf{N} \equiv \{n_i(t_1)\}_{li}$. Noise matrix .
$(\cdot)^T \equiv$ Transpose operation .

At this stage the following assumption is applied. The delays belong to an interval $[\tau_a,\tau_b]$ in which the $s(t_1 - \tau)$ function can be approximated using the following truncated series with negligible error:

$$s(t_l - \tau) \approx \sum_{p=0}^{N_s-1} c_p(t_l)\Phi_p(\tau), \ l = 1, \ldots, N \qquad (3)$$

Herein, $N_S$ is the approximation degree.

This equation can be rewritten in matrix form by collecting the coefficients $c_p(t_l)$ and the functions $\Phi_p(\tau)$ in separate matrices. Define:

$$c_p \equiv [c_p(t_1),...,c_p(t_N)]^T,$$

$$C \equiv [c_0,...,c_{N_S-1}], \qquad (4)$$

$$\Phi_p(\tau) \equiv [\Phi_0(\tau), ..., \Phi_{N_S-1}(\tau)]^T,$$

$$\Phi(\tau) \equiv [\Phi(\tau_1),...,\Phi(\tau_n)].$$

Then, from equation (3):

$$S(\tau) = [C\Phi(\tau_1),...,C\Phi(\tau_n)] = C\Phi(\tau). \qquad (5)$$

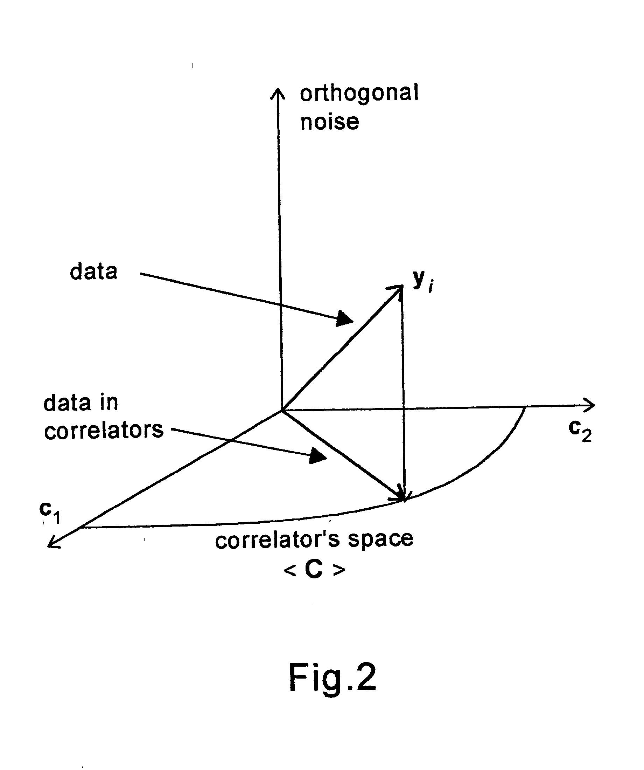

As Fig.2 shows, it can be seen from this equation, that $s(\tau)$ and any antenna sensor signal without noise, $\mathbf{y}_i$, belongs to the span of correlator's space $\mathbf{C}$.

Equation (5) can be substituted into equation (2) to obtain

$$Y = C\Phi(\tau)A^T + N. \qquad (6)$$

This modified signal model equation shows that the signal replicas are contained in the span of $\mathbf{C}$, or equivalently, that the projection onto the span of $\mathbf{C}$ is a sufficient statistic. This fact can be made explicit by using the qr decomposition, $\mathbf{C} = \mathbf{QR}$, where $\mathbf{Q}$ and $\mathbf{C}$ have the same size, $\mathbf{Q}^H\mathbf{Q} = \mathbf{I}$ with $\mathbf{Q}^H$ the Hermitian operation, and $\mathbf{R}$ is full-rank, square and upper triangular. Now, equation (6) is multiplied by $\mathbf{Q}^H$ to condense the information in a smaller matrix $\mathbf{Y}_q$:

$$Y_q \equiv Q^H Y = R\Phi(\tau)A^T + Q^H N \qquad (7)$$

The columns of $\mathbf{Q}$ provide the correlators to be used in a practical implementation.

The Maximum Likelihood Estimator can be obtained operating with the delays only, if the $\mathbf{A}$ matrix is eliminated using the Conditional Maximum Likelihood equation, see Mats Viberg and Björn Ottersen: "Sensor Array Processing Based on Subspace Fitting", IEEE Transactions on Signal Processing, vol. 39, no. 5, pp. 1110-1121, May 1991,

$$\hat{\tau} = \arg\max_{\tau} \text{tr}\left\{ \Phi\left[\Phi^H R^H R\Phi\right]^{-1} \Phi^H R^H Y_q Y_q^H R \right\}, \qquad (8)$$

where "tr" is the trace operator, omitting the $\tau$ dependency for clarity. This equation can be restated in terms of matrix

$\Phi_\perp$ that spans the orthogonal complement to $\Phi$, if such matrix is available:

$$\hat{\tau} = \arg \min_{\tau} \text{tr}\left\{ \Phi_\perp \left[ \Phi_\perp^H \mathbf{R}^{-1} \left( \mathbf{R}^{-1} \right) \Phi_\perp \right]^{-1} \Phi_\perp^H \mathbf{R}^{-1} \mathbf{Y}_q \mathbf{Y}_q^H \left( \mathbf{R}^{-1} \right)^H \right\}. \qquad (9)$$

Three appropriate minimization algorithms are described now. The ESPRIT, IQML and Newton's algorithms are adapted in order to calculate $\hat{\tau}$ in either equation (8) or equation (9) when $\Phi_p(\tau) = \tau^p$. The application of ESPRIT and IQML to a sum of undamped exponentials can be found in A. Paulraj, R. Roy and T. Kailath: "ESPRIT - a subspace rotation approach to estimation of parameters of cisoids in noise", IEEE Transactions on Acoustics, Speech, and Signal Processing, vol. 34, no. 5, Oct. 1986 and Yoram Bresler and Albert Macovski: "Exact Maximum Likelihood Parameter Estimation of Superimposed Exponential Signals in Noise", IEEE Transactions on Acoustics, Speech, and Signal Processing, vol. 34, no. 5, pp. 1081-1089, Oct. 1986, respectively.

The ESPRIT algorithm exploits the shift invariance property of the matrix $\Phi$. In the above mentioned article of A. Paulraj, R. Roy and T. Kailath an adaptation of the algorithm is presented. The sub-matrix that contains from the $r$-th to the $s$-th column, $r \leq s$, is denoted with two subindexes $(\cdot)_{rs}$. Since $\Phi$ is a Vandermonde matrix, the rank of

$$\Phi_{r+1,s+1} = \lambda \Phi_{r,s} \qquad (10)$$

is reduced by one if $\lambda = r_k$ for any $k = 1,2,...,n$. Recalling equation (7) we can repeat the same procedure with the matrix $R^{-1}\mathbf{Y}_q$, and look for an approximated rank reduction of

$$(R^{-1}\mathbf{Y}_q)_{r+1,s+1} - \lambda ( R^{-1}\mathbf{Y}_q)_{r,s}. \qquad (11)$$

These values are the generalized eigenvalues of the pencil,

$$\left[ \left( R^{-1}\mathbf{Y}_q \right)_{r+1,s+1} \left( R^{-1}\mathbf{Y}_q \right)_{r,s}^H , \left( R^{-1}\mathbf{Y}_q \right)_{r+1,s+1} \left( R^{-1}\mathbf{Y}_q \right)_{r,s}^H \right], \qquad (12)$$

and provide the estimation $\hat{\tau}$. Gene H. Golub and Charles F. Van Loan: "Matrix Computations", The Johns Hopkins University Press, third edition, 1996 contains further details on the definition and properties of the pencil of two matrices.

The following part relates to the IQML (Iterative Quadratic Maximum Likelihood) algorithm. The Vandermonde structure of $\Phi$ can be used to form a real polynomial $b_0 + b_1\tau + b_n\tau^n$ with roots $\tau_1, \tau_2,...,\tau_n$. Then, the vector $\mathbf{b}^H \equiv [b_0, b_1,...,b_n]$ follows $\mathbf{b}^H\Phi_{1,n+1} = 0$. This allows to obtain a matrix that spans the orthogonal complement to $\Phi$, by placing shifted replicas of $\mathbf{b}$ in consecutive columns, i.e.,

$$\Phi_\perp \equiv \begin{bmatrix} b & 0 & \dots & 0 \\ 0 & b & \dots & 0 \\ \vdots & \vdots & \ddots & \vdots \\ 0 & 0 & \dots & b \end{bmatrix}. \qquad (13)$$

Given the special structure of $\Phi_\perp$, it can be seen that the product $\Phi_\perp^H\mathbf{v}$ depends linearly on $\mathbf{b}$ for any vector $\mathbf{v}$. So, the elements of $\mathbf{v}$ can be reordered in a matrix $M\{\mathbf{v}\}$ that follows,

$$\Phi_{\perp}^{H} v = M\{v\}b. \tag{14}$$

Now, it can be operated on equation (9) using this equation and the properties of the trace to obtain the minimization problem in terms of **b**:

$$\hat{\tau} = \arg \min_{\mathbf{b} \text{ real}} \mathbf{b}^{H}\mathbf{Kb}, \tag{15}$$

where

$$\mathbf{K} \equiv \sum_{i\equiv1}^{m} M\{\mathbf{y}_{q,i}\}^{H} \left[\Phi_{\perp}^{H}\mathbf{R}^{-1}\left(\mathbf{R}^{-1}\right)^{H}\Phi_{\perp}\right]^{-1} M\{\mathbf{y}_{q,i}\}, \tag{16}$$

and $\mathbf{y}_{q,i}$ is the $i$-th column of $\mathbf{Y}_{q}$. It is to note that **K** depends on **b** through $\Phi_{\perp}$.

The IQML algorithm iterates on **b**. Given the result of the $q$-th iteration $\mathbf{b}(q)$, it calculates **K** first using $\mathbf{b}(q)$, and then $\mathbf{b}(q+1)$ by minimizing equation (15), which is a quadratic problem when **K** is fixed. The application of this algorithm with undamped exponentials can be found in the above mentioned article of Yoram Bresler and Albert Macovski.

The following part relates to the Modified Newton's Method. The classical Newton's Method updates the approximation $\tau_{q}$ with the formula $\tau_{q+1} = \tau_{q} + \mathbf{H}_{q}^{-1}\mathbf{g}_{q}$, where $\mathbf{H}_{q}$ is the Hessian and $\mathbf{g}_{q}$ the gradient of the cost function in equation (8). This method fails if $-\mathbf{H}_{q}$ is not positive definitive. This problem is avoided by loading the diagonal using the iteration

$$\tau_{q+1} = \tau_{q} + \left(\mathbf{H}_{q}^{-1} + \lambda_{q}\mathbf{I}\right)\mathbf{g}_{q},$$

where $\lambda_{q}$ is chosen to make

$$-\left(\mathbf{H}_{q}^{-1} + \lambda_{q}\mathbf{I}\right)\mathbf{g}_{q}$$

positive definite.

The three algorithms described in the previous section have been simulated in a multipath scenario in which a direct signal and one multipath replica impinge the antenna array. In what follows the technical details for each parameter in the modified signal model are summarized.

- $s(t)$. DS-CDMA signal composed of a Gold code with length 1023 chips. The pulse shape is a root-raise cosine with roll-off factor $\beta = 0.2$. The sampling rate is 2 samples/code chip.
- $a_{jk}$. Spatial signatures corresponding to the angles of arrival relative to the broadside of $\Theta_1 = 30°$ for the direct signal, and $\Theta_2 = 80°$ for the multipath replica. The antenna array is linear with antenna sensors separated $\lambda/2$. The direct signal at the output of the antenna sensors is 10 dB stronger. The carrier phases of both signals are chosen randomly in each trial of the simulation.
- $n_{jt}$. The signal-to-noise ratio in the samples after averaging the correlation during N code periods is approximately $S/N(dB) = -23 + 10 \log_{10}(N)$. This is a typical value of the GPS C/A signal, in which averaging N = 200 code periods produces S/N = 0 dB.
- $\tau_1, \tau_2, [\tau_a, \tau_b]$. Signal delays are equal to 0.1 and 0.4 code chips, respectively. The delay interval is [-2,2] code chips.

- n,m,$N_s$. The number of signal replicas is known ($n$ = 2), the number of antenna sensors is $m$ = 10, and the approximation degree is $N_s$ = 14.
- $t_1$, $N$. The sample epochs are taken with a rate of 2 samples/code chip during an integer number of code words.

The truncated series approximation in equation (3) has been obtained from an initial high order Taylor series of $s(t_k\text{-}\tau)$ for all $k$ = 1,2,...,$N$. Then, the Chebyshev polynomials have been used to generate a lower order approximation with an error that is uniformly distributed in $[\tau_a,\tau_b]$, which is very close to the optimal Remez approximation. In this procedure, we have followed the chapter dedicated to the evaluation of functions in William T. Vetterling, William H. Press, Saul A. Teukolsky and Brian P. Flannery: "Numerical Recipes in C", Cambridge University Press, 1997.

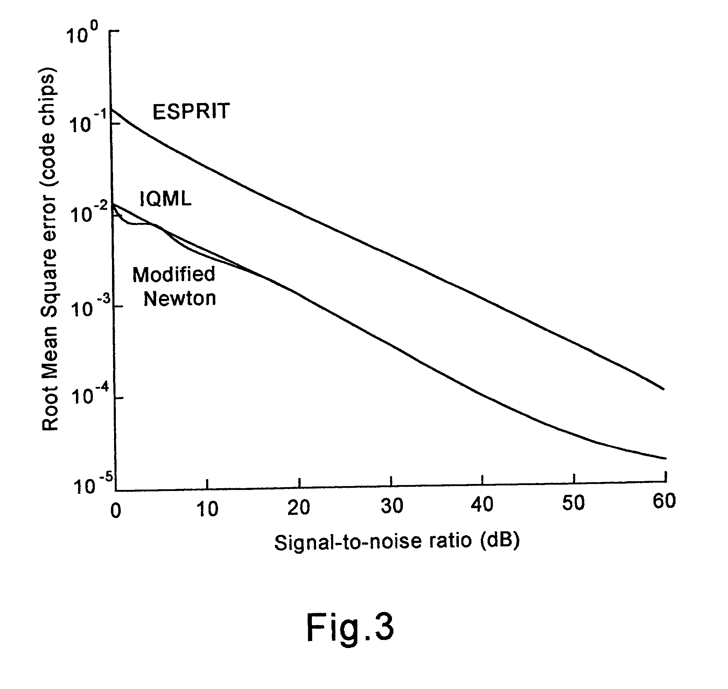

Fig.3 shows the Root Mean Square delay error for different signal-to-noise-ratios. It can be seen that the IQML and the Modified Newton's Method perform much better than the ESPRIT algorithm. The Modified Newton's Method is always slightly better than the IQML method, because the latter uses the constraint set {**b** : $b_i$ real}, while the exact constraint set is {**b** : $b_0 + b_i\tau + ...+ b_n\tau^n$ with real roots}. In the simulation, the Esprit estimation was used to initialize the IQML algorithm and the Modified Newton's Method.

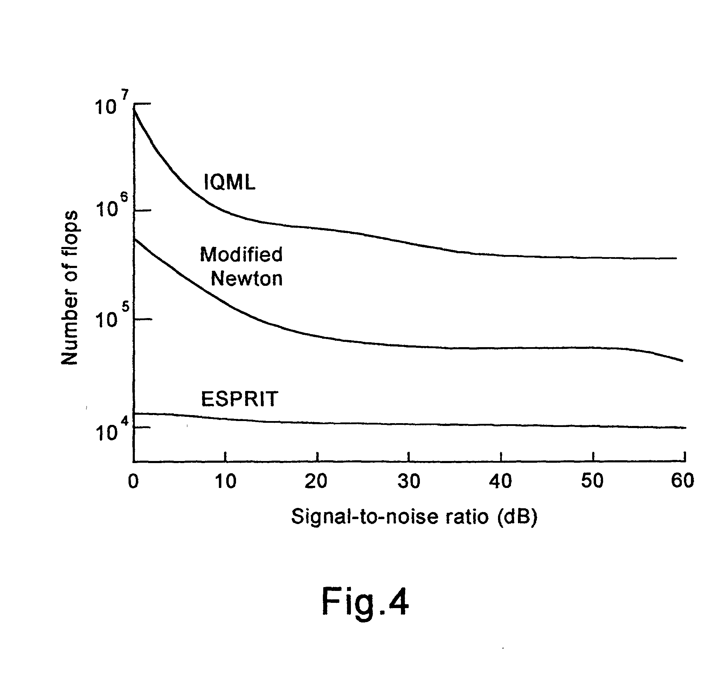

Fig.4 shows the computational burden of the three algorithms. It can be seen that the ESPRIT algorithm has almost a constant burden, while the Modified Newton's Method is about 8 times faster than the IQML. This is because the IQML algorithm must recalculate in each iteration the **K** matrix in equation (16).

In the Modified Newton's Method, the calculation of the value, the gradient and the Hessian of the cost function using the analytical expressions is very efficient; in the current simulation, it takes only about three times the number of flops required to calculate the value of the cost function alone. All algorithms require a higher number of iterations to converge for lower signal-to-noise ratios, and consequently a higher computational burden.

The invention introduces a modified signal model that takes into account the special features of a satellite navigation system. Its specific feature is the introduction of a truncated series expansion that approximates the reference signal. The model leads to an implementation based on a bank of correlators. Simulations have compared the performances of the ESPRIT, IQML and Modified Newton's algorithms when applied to solving the associated minimization problem.

The results show that the Modified Newton's Method actually calculates the Maximum Likelihood estimator, and the IQML algorithm achieves almost the same root mean square error. In terms of complexity, ESPRIT has an almost constant computational burden, while the Modified Newton's Method shows a much smaller (8 times) burden than the IQML algorithm, due to the efficient calculation of the gradient and the Hessian of the cost function.

**Claims**

1. A method for reducing multipath interference errors in a navigation receiver (R) arranged to receive a pseudonoise encoded spread spectrum input signal comprising a direct path signal [$s(t)$] and one or a plurality of multipath signal replicas [$s(t\text{-}\tau_1),s(t\text{-}\tau_2),...,s(t\text{-}\tau_n)$] and to carry out a correlation to generate a correlation signal by correlating said input signal with a reference signal to synchronize the receiver and to deliver time-of-arrival estimation by means of a delay-lock loop, eliminating any signal replica outside of a fixed delay interval containing all times of arrival of said input signal, due to the cross-correlation properties of the spreading pseudonoise code, **characterized by** using a signal model based on a deterministic antenna array ($A_1,A_2,...,A_m$),
   by applying a truncated series approximating said reference signal by means of a series of integer powers of a variable in form of a polynomial delay function together with its coefficient and being valid inside said delay interval,
   by introducing said truncated series into the signal model to form a modified signal model equation by substitution, this equation leading to an implementation of said correlation based on a bank of correlators, and
   by performing minimization of the estimation error by means of an appropriate minimization algorithm.

2. Method according to claim 1, where the modified signal model equation is defined as

$$Y = C\Phi(\tau)A^T + N,$$

   wherein an array of antenna sensors ($A_1$ to $A_m$) with arbitrary geometry and equal directional pattern is considered, wherein a direct wave signal [$s(t)$] and several signal replicas [$s(t\text{-}\tau_1),s(t\text{-}\tau_2),...,s(t\text{-}\tau_n)$] delayed by specular reflections impinge said antenna array,
   wherein the signal at the $i$-th antenna sensor $A_i$ of the antenna sensors [$A_1$ to $A_m$, ($i$ = 1,2,...,$m$)] is

$$y_i(t) = \sum_{k=1}^{n} a_{ik} s(t - \tau_k) + n_i(t),$$

where the known reference signal $s(t)$ contains the spreading code and no data modulation and the remaining elements are:

$a_{ik}$  Coefficient that depends on the $i$-th antenna sensor pattern, and on the complex amplitude and direction of arrival of the $k$-th impinging signal,

$\tau_k$  Delay of the $k$-th signal replica,

$n_i(t)$  Complex White Gaussian noise process with variance $\sigma^2$ and uncorrelated among antenna sensors $A_1$ to $A_m$,

wherein a receiver (R) comprising m channels and connected with the antenna sensors ($A_1$ to $A_m$) takes $N$ samples, relative to its own time reference, at epochs $t = t_1, t_2, ..., t_N$, wherein the samples are arranged in a matrix $\mathbf{Y}$, in which time varies column-wise and the antenna sensor $A_i$ row-wise, i.e. $(\mathbf{Y})_{li}$ is the sample at time $t_1$ from the $i$-th sensor, and the $k$-th wave adds to this observation matrix $\mathbf{s}(\tau_k)\mathbf{a}_k^T$, where

$$a_k \equiv [a_{1k}, a_{2k},...,a_{mk}]^T,$$

$$s(\tau) \equiv \left[s(t_1 - \tau), s(t_2 - \tau), ...., s(t_N - \tau),\right]^T$$

are the time and spatial signatures, respectively, the matrix Y being written as

$$\mathbf{Y} = \sum_{k=1}^{n} s(\tau_k)\mathbf{a}_k^T + \mathbf{N} = \mathbf{S}(\tau)\mathbf{A}^T + \mathbf{N}$$

with

$a_k \equiv [a_{1k}, a_{2k},..., a_{mk}]^T$,
$s(\tau) \equiv [s(t_1 - \tau), s(t_2 - \tau), ..., s(t_N - \tau)]^T$,
$\tau \equiv [\tau_1, \tau_2,..., \tau_n]^T$. Vector of delays .
$\mathbf{S}(\tau) \equiv [s(\tau_1), s(\tau_2),..., s(\tau_n)]$. Time signatures .
$\mathbf{A} \equiv [\mathbf{a}_1, \mathbf{a}_2,..., \mathbf{a}_m]$. Spatial signatures .
$\mathbf{N} \equiv \{n_i(t_1)\}_{li}$. Noise matrix.
$(\cdot)^T \equiv$ Transpose operation ,

applying the assumption at this stage that the delays belong to an interval $[\tau_a, \tau_b]$ in which the $s(t_1 - \tau)$ function can be approximated using the following truncated series with negligible error:

$$s(t_1 - \tau) \approx \sum_{p=0}^{N_s-1} c_p(t_1)\Phi_p(\tau), \quad 1 = 1, ..., N$$

with

$$c_p \equiv [c_p(t_1),...,c_p(t_N)]^T,$$

$$C \equiv [c_0,...,c_{N_S-1}],$$

$$\Phi_p(\tau) \equiv [\Phi_0(\tau), ..., \Phi_{N_S-1}(\tau)]^T,$$

$$\Phi(\tau) \equiv [\Phi(\tau_1),...,\Phi(\tau_n)].$$

wherein $N_S$ is the approximation degree, this equation being written in matrix form by collecting the coefficients $c_p(t_1)$ and the functions $\Phi_p(\tau)$ in separate matrices

$$S(\tau) = [C\Phi(\tau_1),...,C\Phi(\tau_n)] = C\Phi(\tau),$$

forming said modified signal model equation

$$Y = C\Phi(\tau)A^T + N$$

by substitution,
this modified signal model equation showing the fact that the signal replicas are contained in the span of correlator's space C, or equivalently, that the projection onto the span of **C** is a sufficient statistic, this fact being made explicit by using decomposition, **C** = **QR,** where **Q** and **C** have the same size, $\mathbf{Q}^H\mathbf{Q} = \mathbf{I}$ with $\mathbf{Q}^H$ the Hermitian operation, and **R** is full-rank, square and upper triangular, and condensing the information in a smaller matrix $\mathbf{Y_q}$ by multiplying the equation **Y** = **C**$\Phi(\tau)\mathbf{A}^T$ + **N** by $\mathbf{Q}^H$, whereby the equation

$$Y_q \equiv Q^H Y \equiv R\Phi(\tau)A^T + Q^H N$$

is given as a result, the columns of **Q** providing the correlators to be used in an implementation.

3. Method according to claim 1 or 2, further **characterized by** using the Maximum Likelihood Estimation to perform minimization of the estimation error.

4. Method according to claim 3, further **characterized by** applying the ESPRIT minimization algorithm to perform said minimization of the estimation error.

5. Method according to claim 3, further **characterized by** applying the IQML (Iterative Quadratic Maximum Likelihood) minimization algorithm to perform said minimization of the estimation error.

6. Method according to claim 3, further **characterized by** applying the Newton minimization algorithm in classical form or in a specifically modified form to perform said minimization of the estimation error.

7. Method of using a receiver operating in accordance with the method according to any of the preceding claims as navigation receiver designed for the GPS or GNSS navigation system.

**Patentansprüche**

1. Verfahren zur Verringerung von Mehrwegstörungsfehlern in einem Navigationsempfänger (R), der zum Empfangen eines mit Pseudozufallsrauschen codierten Bandspreiz-Eingangssignals, das ein Direktwegsignal [$s(t)$] und ein oder mehrere Mehrwegsignal-Replikas [$s(t-\tau_1),s(t-\tau_2),...,s(t-\tau_n)$] umfasst, und zum Ausführen einer Korrelation zum Erzeugen eines Korrelationssignals durch Korrelieren des Eingangssignals mit einem Referenzsignal ausgelegt ist, um infolge der Kreuzkorrelationseigenschaften des bandspreizenden Pseudozufallscodes den Empfänger zu synchronisieren und eine Ankunftszeitschätzung mittels einer Delay-Lock-Loop zu liefern, wobei jegliche Signal-Replika außerhalb eines festgelegten Verzögerungsintervalls eliminiert wird, das alle Ankunftszeiten des Eingangssignals enthält, **gekennzeichnet**
**durch** Benutzen eines auf einer deterministischen Antennengruppe (A$_1$,A$_2$,...,A$_m$) basierten Signalmodells,
**durch** Verwenden einer verkürzten Folge, die das Bezugssignal mittels einer Folge von ganzzahligen Potenzen einer Veränderlichen in Form einer polynomischen Verzögerungsfunktion zusammen mit deren Koeffizienten annähert und innerhalb des Verzögerungsintervalls gültig ist, durch Einführen der verkürzten Folge in das Signalmodell, um eine modifizierte Signalmodellgleichung durch Substitution zu bilden, wobei diese Gleichung zu einer Implementierung der Korrelation führt, die auf einer Korrelatorbank basiert, und
**durch** Ausführen einer Minimierung des Schätzfehlers mittels eines geeigneten Minimierungsalgorithmus.

2. Verfahren nach Anspruch 1, wobei die modifizierte Signalmodellgleichung definiert ist als

$$Y = C\Phi(\tau)A^{T} + N$$

bei welchem eine Gruppe von Antennensensoren (A$_1$ bis A$_m$) mit willkürlicher Geometrie und gleichem Richtdiagramm betrachtet wird,
bei welchem ein direktes Wellensignal [$s(t)$] und einige durch Spiegelreflexionen verzögerte Signal-Replikas [$s(t-\tau_1),s(t-\tau_2),...,s(t-\tau_n)$] auf die Antennengruppe auftreffen,
bei welchem das Signal am i-ten Antennensensor der Antennensensoren [A$_1$ bis A$_m$, ($i = 1,2,...,m$)]

$$y_i(t) = \sum_{k=1}^{n} a_{ik} s(t - \tau_k) + n_i(t)$$

ist, wobei das bekannte Bezugssignal s(t) den Spreizcode und keine Datenmodulation enthält und die übrigen Elemente folgende sind:

$a_{ik}$     Koeffizient, der vom $i$-ten Antennensensordiagramm und von der komplexen Amplitude und Ankunftsrichtung des $k$-ten auftreffenden Signals abhängig ist,

$\tau_k$     Verzögerung der $k$-ten Signal-Replika,

$n_i(t)$     Komplexer weißer Gaußscher Rauschprozess mit Varianz $\sigma^2$ und unter den Antennensensoren A$_1$ bis A$_m$ unkorreliert,

bei welchem ein Empfänger (R), der m Kanäle umfasst und mit den Antennensensoren (A$_1$ bis A$_m$) verbunden ist, $N$ Abtastproben zu Zeitpunkten $t$ = t$_1$, $t_2$,.. t$_N$, bezogen auf seine eigene Zeitreferenz, abnimmt,
bei welchem die Abtastproben in einer Matrix Y angeordnet sind, in welcher sich die Zeit spaltenweise und der Antennensensor A$_i$ zeilenweise ändert, d.h. $(\mathbf{Y})_{li}$ ist die Abtastprobe zur Zeit $t_1$ des $i$-ten Sensors und die $k$-te Welle trägt zu dieser Beobachtungsmatrix $\mathbf{s}(\tau_k)\mathbf{a}_k^{T}$ bei, wobei

$$a_k \equiv [a_{1k}, a_{2k},..., a_{mk}]^{T},$$

$$\mathbf{s}(\tau) \equiv \left[ s(t_1 - \tau), s(t_2 - \tau), \ldots, s(t_N - \tau), \right]^{T}$$

die zeitlichen bzw. räumlichen Signaturen der Matrix Y sind, die folgendermaßen geschrieben wird:

$$\mathbf{Y} = \sum_{k=1}^{n} \mathbf{s}(\tau_k)\mathbf{a}_k^T + \mathbf{N} = \mathbf{S}(\tau)\mathbf{A}^T + \mathbf{N}$$

mit

$\mathbf{a}_k \equiv [a_{1k}, a_{2k},..., a_{mk}]^T$,
$\mathbf{s}(\tau) \equiv [s(t_1 - \tau), s(t_2 - \tau), ..., s(t_N - \tau)]^T$,
$\tau \equiv [\tau_1, \tau_2, ..., \tau_n]^T$. Vektor der Verzögerungen .
$\mathbf{S}(\tau) \equiv [s(\tau_1), s(\tau_2),...,s(\tau_n)]$. Zeitliche Signaturen .
$\mathbf{A} \equiv [\mathbf{a}_1, \mathbf{a}_2,...,\mathbf{a}_m]$. Räumliche Signaturen .
$\mathbf{N} \equiv \{n_i(t_1)\}_{li}$ . Rauschmatrix .
$(\cdot)^T \equiv$ Transponieroperation ,

wobei in diesem Stadium die Annahme angewandt wird, dass die Verzögerungen zu einem Intervall $[\tau_a, \tau_b]$ gehören, in welchem die $s(t_1 - \tau)$-Funktion unter Benutzung der verkürzten Folge mit vernachlässigbarem Fehler angenähert werden kann:

$$s(t_1 - \tau) \approx \sum_{p=0}^{N_s-1} c_p(t_1)\Phi_p(\tau), l = 1,..., N$$

mit

$$c_p \equiv [c_p(t_1),...,c_p(t_N)]^T,$$

$$C \equiv [c_0,...,c_{N_S-1}],$$

$$\Phi_p(\tau) \equiv [\Phi_0(\tau), ..., \Phi_{N_S-1}(\tau)]^T,$$

$$\Phi(\tau) \equiv [\Phi(\tau_1),...,\Phi(\tau_n)].$$

wobei diese Gleichung in Matrixform durch Sammeln der Koeffizienten $c_p(t_1)$ und der Funktionen $\Phi_p(\tau)$ in getrennten Matrizen geschrieben werden kann

$$S(\tau) = [C\Phi(\tau_1),...,C\Phi(\tau_n)] = C\Phi(\tau),$$

wobei die Signalmodellgleichung

$$Y = C\Phi(\tau)A^T + N$$

durch Substitution gebildet wird,
wobei diese modifizierte Signalmodellgleichung die Tatsache zeigt, dass die Signal-Replikas im Arbeitsraumbereich **C** des Korrelators enthalten sind oder dass gleichbedeutend die Projektion auf den Arbeitsbereich **C** eine ausreichende statistische Größe ist, wobei diese Tatsache durch Benutzung einer Zerlegung **C** = **QR** explizit gemacht wird, wobei **Q** und **C** die gleiche Größe haben, $\mathbf{Q}^H\mathbf{Q} = \mathbf{I}$ mit $\mathbf{Q}^H$ die hermitesche Operation ist und **R** vollrangig, quadratisch und oben dreieckig ist und wobei die Information durch Multiplizieren der Gleichung $\mathbf{Y} = \mathbf{C}\Phi(\tau)\mathbf{A}^T +$

**N** mit **Q**$^H$ in eine kleinere Matrix **Y**$_q$ verdichtet wird, wodurch sich die Gleichung

$$Y_q \equiv Q^H Y \equiv R\Phi(\tau)AT + Q^H N$$

als Resultat ergibt, wobei die Spalten von **Q** die bei einer Realisierung zu verwendenden Korrelatoren bestimmen.

**3.** Verfahren nach Anspruch 1 oder 2, ferner **gekennzeichnet durch** Verwendung der Maximum-Likelihood-Schätzung zum Ausführen der Minimierung des Schätzungsfehlers.

**4.** Verfahren nach Anspruch 3, ferner **gekennzeichnet durch** Verwendung des ESPRIT-Minimierungsalgorithmus zum Ausführen der erwähnten Minimierung des Schätzungsfehlers.

**5.** Verfahren nach Anspruch 3, ferner **gekennzeichnet durch** Verwendung des IQML(Iterative Quadratic Maximum Likelihood)-Minimierungsalgorithmus zum Ausführen der erwähnten Minimierung des Schätzungsfehlers.

**6.** Verfahren nach Anspruch 3, ferner **gekennzeichnet durch** Verwendung des Newton-Minimierungsalgorithmus in herkömmlicher Form oder in einer spezifisch modifizierten Form zum Ausführen der erwähnten Minimierung des Schätzungsfehlers.

**7.** Verfahren zur Benutzung eines Empfängers, der gemäß dem Verfahren nach einem der vorhergehenden Ansprüche als Navigationsempfänger arbeitet, der für das GPS- oder GNSS-Navigationssystem ausgelegt ist.

**Revendications**

**1.** Procédé de réduction d'erreurs d'interférence de trajets multiples dans un récepteur de navigation (R) arrangé pour recevoir un signal d'entrée à spectre étendu codé par un pseudo-bruit comprenant un signal de trajet direct [s(t)] et un signal ou une pluralité de répliques de signaux à propagation par trajets multiples [s(t-$\tau_1$), s(t-$\tau_2$), ..., s(t-$\tau_n$)], et pour procéder à une corrélation pour générer un signal de corrélation en corrélant ledit signal d'entrée avec un signal de référence afin de synchroniser le récepteur et pour délivrer une estimation de l'instant d'arrivée au moyen d'une boucle à retard de phase, éliminant toute réplique de signal en dehors d'un intervalle de retard fixé contenant tous les temps d'arrivée dudit signal d'entrée, en raison des propriétés de corrélation mutuelle du code de pseudo-bruit d'étalement, **caractérisé par**
l'utilisation d'un modèle de signal basé sur un réseau d'antennes déterministe (A$_1$, A$_2$, ..., A$_m$),
l'application d'une série tronquée approximant ledit signal de référence 1 et étant valide à l'intérieur dudit intervalle de retard,
l'introduction de ladite série tronquée dans le modèle de signal pour former une équation de modèle de signal modifié par substitution, cette équation conduisant à une implémentation de ladite corrélation basée sur une banque de corrélateurs, et
la réalisation d'une minimisation de l'erreur d'estimation au moyen d'un algorithme de minimisation approprié.

**2.** Procédé selon la revendication 1, dans lequel l'équation de modèle de signal modifié est définie par

$$Y = C\Phi(\tau)A^T + N,$$

dans lequel est considéré un réseau de capteurs d'antenne (A$_1$ à A$_m$) ayant une géométrie arbitraire et une configuration directionnelle égale,
dans lequel un signal d'onde direct [s(t)] et plusieurs répliques de signaux [s(t-$\tau_1$), s(t-$\tau_2$), ... , s(t-$\tau_n$)] retardées par des réflexions spéculaires frappent ledit réseau d'antennes,
dans lequel le signal au niveau du i$^{ème}$ capteur d'antenne A$_i$ parmi les capteurs d'antenne [A$_1$ à A$_m$, (i = 1, 2, ..., m)] est donné par :

$$y_i(t) = \sum_{k=1}^{n} a_{ik} s(t - \tau_k) + n_i(t)$$

où le signal de référence connu s(t) contient le code d'étalement et aucune modulation de données, et où les éléments restants sont :

$a_{ik}$     Coefficient qui dépend de la disposition du $i^{ème}$ capteur d'antenne et de l'amplitude complexe et de la direction d'arrivée du $k^{ième}$ signal frappant le capteur.

$\tau_k$     Retard de la $k^{ième}$ réplique de signal.

$n_i(t)$     Processus de bruit gaussien blanc complexe avec variance $\sigma^2$ et non-corrélation parmi les capteurs d'antenne $A_1$ à $A_m$.

dans lequel un récepteur (R) comprenant m canaux et étant connecté aux capteurs d'antenne ($A_1$ à $A_m$) prend N échantillons, relativement à sa propre référence de temps, aux temps t = $t_1$, $t_2$, ..., $t_N$,

dans lequel les échantillons sont arrangés dans une matrice Y, dans laquelle le temps varie suivant les colonnes et le capteur d'antenne $A_i$ suivant les rangées, c'est-à-dire que $(Y)_{li}$ est l'échantillon au temps $t_1$ du $i^{ème}$ capteur, et la $k^{ième}$ onde ajoute à cette matrice d'observation $s(\tau_k)a_k{}^T$, où

$$a_k = [a_{1k}, a_{2k}, ..., a_{mk}]^T$$

$$s(\tau) = [s(t_1-\tau), s(t_2-\tau), ..., s(t_N-\tau)]^T$$

sont respectivement les signatures temporelles et spatiales, la matrice Y étant écrite sous la forme :

$$Y = \sum_{k=1}^{n} s(\tau_k)a_k^T + N = S(\tau)A^T + N$$

avec
$a_k = [a_{1k}, a_{2k}, ..., a_{mk}]^T$,
$s(\tau) = [s(t_1-\tau), s(t_2-\tau), ..., s(t_N-\tau)]^T$,
$\tau = [\tau_1, \tau_2, ..., \tau_n]^T$, vecteur des retards,
$S(\tau) = [s(\tau_1), s(\tau_2), ..., s(\tau_n)]$, signatures temporelles,
$A = [a_1, a_2, ..., a_m]$, signatures spatiales,
$N = \{n_i(t_1)\}_{li}$, matrice de bruit,
$(.)^T$ = opération de transposition

en supposant à ce niveau que les retards appartiennent à un intervalle $[\tau_a, \tau_b]$ dans lequel la fonction $s(t_1-\tau)$ peut être approximée, avec une erreur négligeable, à l'aide de la série tronquée suivante :

$$s(t_l - \tau) \approx \sum_{p=0}^{Ns-1} c_p(t_l)\Phi_p(\tau), l = 1,...,N$$

avec
$c_p = [c_p(t_1), ..., c_p(t_N)]^T$,
     $C = [c_0, ..., c_{N S-1}]$,

$$\Phi(\tau) = [\Phi_0(\tau), ..., \Phi_{N\ S-1}(\tau)]^T,$$
$$\Phi(\tau) = [\Phi(\tau_1), ..., \Phi(\tau_n)],$$

cette équation étant écrite sous la forme d'une matrice en collectant les coefficients $c_p(t_1)$ et les fonctions $\Phi p(\tau)$ dans des matrices séparées

$$S(\tau) = [C\Phi(\tau_1), ..., C\Phi(\tau_n)] = C\Phi(\tau),$$

formant ladite équation de modèle de signal

$$Y = C\Phi(\tau)A^T + N$$

par substitution,

cette équation de modèle de signal modifié représentant le fait que les répliques de signaux sont contenues dans l'étendue de l'espace de corrélateurs C ou, de manière équivalente, que la projection dans l'étendue de C est une statistique suffisante, ce fait étant rendu explicite par l'utilisation de la décomposition C = QR, où Q et C ont la même taille, $Q^H Q = I$ avec $Q^H$ l'opération hermitienne et R carré de rang plein et triangulaire supérieur, et le fait de condenser les informations dans une matrice plus petite $Y_q$ en multipliant l'équation $Y = C\Phi(\tau)A^T + N$ par $Q^H$, moyennant quoi l'équation

$$Y_q \equiv Q^H Y \equiv R\Phi(\tau)A^T + Q^H N$$

est donnée comme résultat, les colonnes de Q fournissant les corrélateurs à utiliser dans une implémentation.

3. Procédé selon les revendications 1 ou 2, en outre **caractérisé par** l'utilisation d'une estimation du maximum de vraisemblance pour procéder à la minimisation de l'erreur d'estimation.

4. Procédé selon la revendication 3, en outre **caractérisé par** l'application de l'algorithme de minimisation ESPRIT pour procéder à ladite minimisation de l'erreur d'estimation.

5. Procédé selon la revendication 3, en outre **caractérisé par** l'application de l'algorithme de minimisation IQML (vraisemblance maximale quadratique itérative) pour procéder à ladite minimisation de l'erreur d'estimation.

6. Procédé selon la revendication 3, en outre **caractérisé par** l'application de l'algorithme de minimisation de Newton sous sa forme classique ou sous une forme spécifiquement modifiée pour procéder à ladite minimisation de l'erreur d'estimation.

7. Procédé d'utilisation d'un récepteur fonctionnant en accord avec le procédé selon l'une quelconque des revendications précédentes comme récepteur de navigation conçu pour le système de navigation GPS ou GNSS.

specular
reflection / $s(t-\tau_2)$

specular
reflection

$s(t-\tau_n)$

$s(t)$

direct signal

$A_1$

specular
reflection

$A_2$

$s(t-\tau_1)$

channel 1
channel 2

$A_m$

receiver

channel $m$

R

Fig.1

Fig.2

Fig.3

Fig.4